(19)

Europäisches
Patentamt
European
Patent Office
Office européen
des brevets

(11) **EP 4 578 571 A1**

(12) **EUROPEAN PATENT APPLICATION**

(43) Date of publication:
**02.07.2025 Bulletin 2025/27**

(21) Application number: 24222146.3

(22) Date of filing: **20.12.2024**

(51) International Patent Classification (IPC):
*B22D 17/22* (2006.01)    *B22D 17/32* (2006.01)
*B22D 17/00* (2006.01)    *B22D 17/20* (2006.01)
*B22D 46/00* (2006.01)    *B22D 2/00* (2006.01)

(52) Cooperative Patent Classification (CPC):
**B22D 17/32; B22D 17/00; B22D 17/20;
B22D 17/22; B22D 46/00;** B22D 2/00

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.12.2023  CN 202311843137**

(71) Applicant: **Volvo Car Corporation
405 31 Göteborg (SE)**

(72) Inventors:
• WANG, Tao
  **Shanghai, 201815 (CN)**
• ZHANG, Chen
  **Shanghai, 201815 (CN)**
• CHEN, Junpeng
  **Shanghai, 201815 (CN)**

(74) Representative: **Maiwald GmbH
Engineering
Elisenhof
Elisenstrasse 3
80335 München (DE)**

(54) **METHODS FOR PREDICTING MECHANICAL PROPERTIES OF CASTING PART AND DESIGNING CASTING DIE**

(57)    The present invention discloses a method for predicting the mechanical properties of a casting part based on the flow distances of an aluminum alloy melt, a method for designing a casting die for mega casting, and an aluminum alloy casting part produced through the casting die thus designed. By applying the method of the present invention, the mechanical properties of the large components produced by mega casting within a specified process parameter window, especially at a specified injection speed, can be predicted and controlled, thereby the automation in automobile manufacture is improved, and the design and properties of the mega-casting products are optimized.

Figure 1

**Description**

**TECHNICAL FIELD**

The present invention relates to the technical field of mega casting, in particular, to a method for predicting the mechanical properties and optimizing the product design of the large components produced by mega casting. By applying the method of the present invention, the mechanical properties of the large components produced by mega casting within a specified process parameter window, especially at a specified injection speed, can be predicted and controlled, thereby the automation in automobile manufacture is improved, and the design and properties of the mega-casting products are optimized.

**BACKGROUND ART**

In a mega casting process, large aluminum casting parts are cast in one step by using a large die casting machine, which eliminates the steps of assembling and welding multiple parts in traditional processes. This brings about advantages such as simplifying the production processes, reducing the weight of the vehicle body, therefore mega casting has attracted wide attention and developed rapidly.

However, the mega casting process is also confronted with many challenges. For example, the effect of the die casting process on the properties of the casting part is unclear, and the properties of the casting part are unpredictable. Therefore, it is necessary to further investigate the properties of the large aluminum alloy casting parts produced by mega casting.

**SUMMARY OF INVENTION**

The inventors have found that, in a mega casting process, the mechanical properties of a large casting part can be quickly and conveniently predicted based on the flow distances of an aluminum alloy melt. On such a basis, the present invention provides a method for predicting mechanical properties of a casting part based on the flow distances of an aluminum alloy melt, such that the mechanical properties of the large components produced by mega casting within a specified process parameter window, especially at a specified injection speed, is predictable and controllable, thereby the automation in automobile manufacture is improved, and the design and properties of the mega-casting products are optimized. The present invention further provides a method for optimizing the design of a mega-casting product by designing a casting die for mega casting, comprising predicting the mechanical property parameters of the casting part at each sampling point; and changing the structural arrangement (especially the runner arrangement) at the corresponding positions in the casting die, based on the differences between the predicted values and the desired values of the mechanical property parameters, so that the casting part has the desired values of the mechanical property parameters at the sampling points. Hence, according to the requirements on the performances of an automobile, the structure of the casting die can be quickly and conveniently customized, designed and adjusted, and the design and properties of the mega casting product can be optimized and corrected.

According to an aspect of the present invention, provided is a method for predicting the mechanical properties of a casting part based on the flow distances of an aluminum alloy melt, characterized in that the method comprises the following steps:

Step a) producing a casting part through the casting die by mega casting an aluminum alloy melt;

Step b) selecting several sampling points on the casting part;

Step c) calculating the flow distances of the aluminum alloy melt at each sampling point, wherein the flow distance means the distance through which the aluminum alloy melt flows from an outlet of the injection chamber to the sampling point of the casting part along a runner of the casting die during the mega casting; and

Step d) measuring the mechanical property parameters of the casting part at each sampling point, wherein said mechanical property parameters are one or more selected from ultimate tensile strength, yield strength, elongation at break and Brinell hardness;

Step e) fitting function(s) between the mechanical property parameters and the flow distance by multiple regression, based on the flow distances obtained from Step c) and the mechanical property parameters obtained from Step d) at each sampling point, and

Step f) predicting the mechanical properties of other casting parts produced through the casting die at each sampling point, based on the flow distances and the function(s) between the mechanical property parameters and the flow distances, wherein the other casting parts come from different production batches from that of the casting part in Step a).

In an embodiment of the present invention, the function(s) between the mechanical property parameters and the flow distances fitted in Step e) is one or more of the following equations:

i)

$$\text{Equation 1: UTS=a1-a2*FD+a3*FD}^2,$$

wherein UTS represents the ultimate tensile strength, unit: MPa; and FD represents the flow distance of the aluminum alloy melt, unit: m;

ii)

$$\text{Equation 2: YS=b1+b2*HIS-b3*FD+b4*FD}^2,$$

wherein YS represents the yield strength, unit: MPa; HIS represents the average speed of high-speed injection of a pressing die, unit: m/s; and FD represents the flow distance of the aluminum alloy melt, unit: m;

iii)

$$\text{Equation 3: EI=c1-c2*FD,}$$

wherein EI represents the elongation at break, unit: %; and FD represents the low distance of the aluminum alloy melt, unit: m;

iv)

$$\text{Equation 4: H= d1-d2*FD+d3*FD}^2,$$

wherein H represents the Brinell hardness, unit: HBW; and FD represents the flow distance of the aluminum alloy melt, unit: m;

wherein a1, a2, a3, b1, b2, c1, c2, d1, d2 and d3 are coefficients.

In an embodiment of the present invention, the FD is 0.8-2 m.
In an embodiment of the present invention, the HIS is more than 5.7 but no more than 7 m/s.
In an embodiment of the present invention, in Step b), 4-15 sampling points, preferably 5-10 sampling points, and more preferably 6-8 sampling points are selected.
In an embodiment of the present invention, in Step b), the sampling points are selected by using a moldflow analysis software.
In an embodiment of the present invention, in Step c), the flow distances of the aluminum alloy melt at each sampling point are calculated by using a moldflow analysis software.
In an embodiment of the present invention, in Step d), the mechanical property parameters of the casting part at each sampling point are measured by using a universal testing machine.
In an embodiment of the present invention, in Step e), the fitting is performed by using the Minitab software.
In an embodiment of the present invention, in Step e), 2, 3 or 4 of Equation 1, Equation 2, Equation 3 and Equation 4 are fitted, and preferably, Equation 1, Equation 2, Equation 3 and Equation 4 are fitted.
In another embodiment of the present application, provided is a method for designing a casting die for mega casting, characterized in that the method comprises the following steps:

predicting the mechanical property parameters of the casting part at each sampling point according to the method for predicting the mechanical properties of a casting part based on the flow distances of an aluminum alloy melt according to the present invention, based on the flow distances and the function(s) between the mechanical property parameters and the flow distances; and

changing the structural arrangement of the casting die at the corresponding positions, based on the differences between the predicted values and the desired values of the mechanical property parameters as well as the function(s) between the mechanical property parameters and the flow distances.

In an embodiment of the present invention, the changing the structural arrangement of the casting die at the corresponding positions is changing the runner arrangement of the casting die at the corresponding positions;

preferably, the runner arrangement of the casting die is changed by the following means: providing one or more barriers, corners, and/or guiding means.

In an embodiment of the present invention, the aluminum alloy is an aluminum-silicon alloy;

preferably, based on the total weight of the aluminum alloy, the aluminum alloy comprises:

7.6-8.5 wt% of silicon.

0-0.15 wt% of iron.

0.5-0.6 wt% of manganese.

0.2-0.25 wt% of magnesium,

0.07-0.15 wt% of titanium.

0.018-0.022 wt% of strontium, and

the balance being aluminum.

In another embodiment of the present invention, provided is aluminum alloy casting part produced through the casting die for mega casting designed according to the method of the present invention.

**DESCRIPTION OF DRAWINGS**

FIG. 1 is a three-dimensional schematic diagram of a mega-casting rear floor of an automobile.

FIG. 2 is a schematic diagram for the movement of the pressing die in the injection chamber.

FIG. 3 illustrates a multiple regression modeling report for the ultimate tensile strength of the mega casting part.

FIG. 4 illustrates a multiple regression modeling report for the yield strength of the mega casting part.

FIG. 5 illustrates a multiple regression modeling report for the elongation at break of the mega casting part.

FIG. 6 illustrates a multiple regression modeling report for the Brinell hardness of the mega casting part.

FIG. 7 illustrates the metallograph of the mega casting part. The figure on the left (I) and the figure on the right (II) represent the microstructure at 500x and 1000x magnification, respectively.

Figure 8 are matrix diagrams between the ultimate tensile strength (UTS) (MPa), the yield strength (MPa), the elongation at break (EI) (%), the Brinell hardness (HBW), the secondary dendrite arm spacing (SDAS)($\mu$m) and the flow distance (FD) of the mega casting part, respectively.

FIG. 9 is a flow chart of the method for predicting the mechanical properties of a casting part according to an embodiment of the present invention.

FIG. 10 is a flow chart of the method for designing a casting die for meta casting according to an embodiment of the present invention.

## DETIALED DESCRIPTION

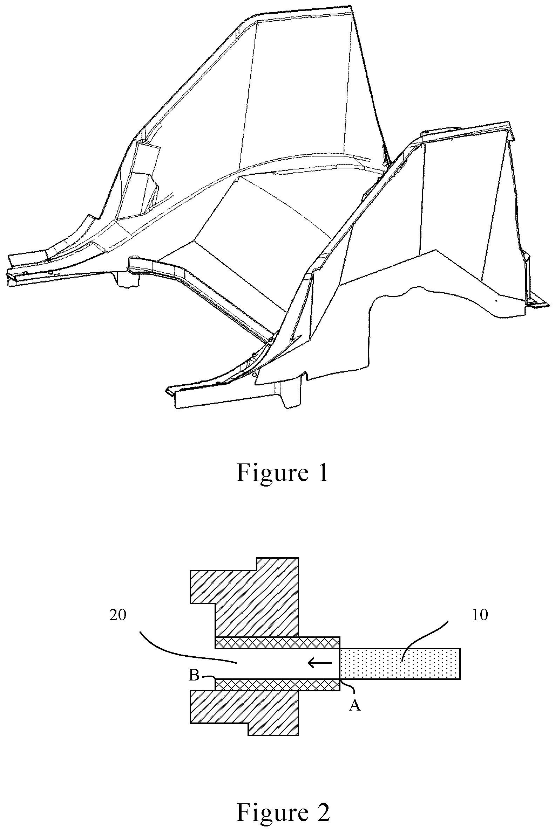

FIG. 1 is a three-dimensional schematic diagram of a mega-casting rear floor of an automobile.

In the mega casting process, an aluminum alloy is pre-melted in a furnace, and the aluminum alloy melt is introduced into an injection chamber. As an embodiment of the present invention, as shown in FIG. 2, the injection chamber 20 is provided with a single pressing head 10, and the outlet point B of the injection chamber 20 is connected to a casting die. The pressing head 10 is connected to a hydraulic system. The pressing head 10 pushes the aluminum alloy melt to move in the direction indicated by the arrow from the inlet point A to the outlet point B in the injection chamber 20. The aluminum alloy melt exists the outlet point B of the injection chamber 20 at a certain speed, spreads through the runner of the casting die and fills the cavity on the surface of the casting die. The runner of the casting die is relatively flat, and the spreading thickness of the aluminum alloy melt in the runner of the casting die is from about 3 to 4 mm. Upon cooling, the aluminum alloy melt is solidified and released, resulting in a mega-casting casting part. The distance from point A to point B is called a stroke. In the direction from point A to point B, the whole stroke is divided into the first phase, the second phase, and the third phase. During the process of manufacturing the rear floor of an automobile as shown in FIG. 1, the first phase and the second phase are low speed injection phases having an average low injection speed of from about 0.18 to less than about 0.38 m/s. The third phase is a high speed injection phase having an average speed of high-speed injection of more than about 5.7 but less than about 7 m/s. The injection speed means the distance traveled by the pressing head 10 within the injection chamber 20 per unit time. In other embodiments of the present invention, the injection speeds in the first phase, the second phase and the third phase may be the same or different, and are independently selected from: a low speed injection speed (L (LIS), from about 0.18 to less than about 0.38 m/s on average), a nominal injection speed (N, from about 0.38 to about 5.7 m/s on average), a high speed injection speed (H (HIS), more than about 5.7 but no more than about 7 m/s on average).

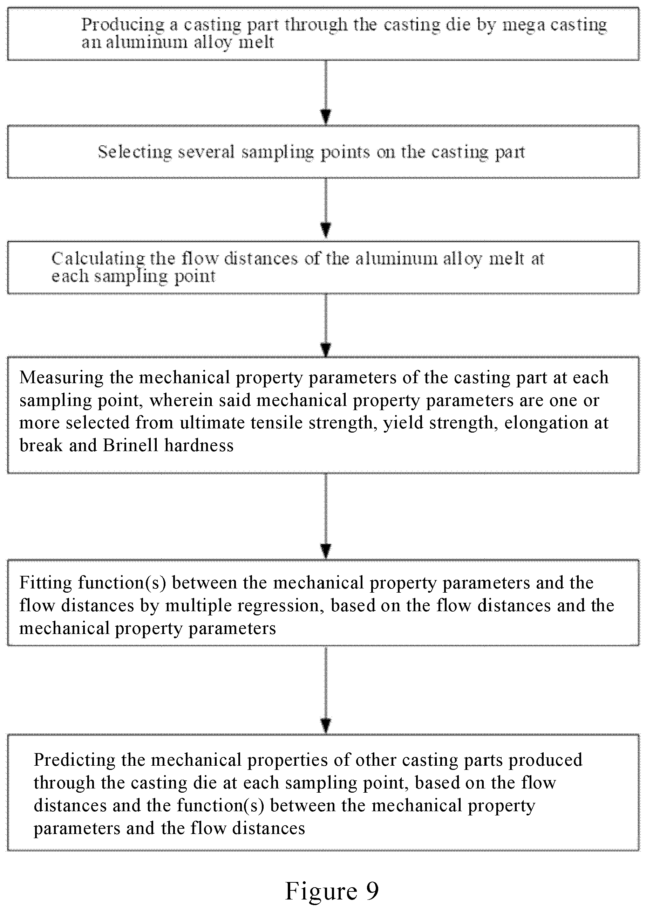

FIG. 9 is a flow chart of the method for predicting mechanical properties of a casting part according to an embodiment of the present invention. As shown in FIG. 9, in an embodiment of the present invention, provided is a method for predicting the mechanical properties of a casting part based on the flow distances of an aluminum alloy melt, characterized in that the method comprises the following steps:

Step a) producing a casting part through the casting die by mega casting an aluminum alloy melt;

Step b) selecting several sampling points on the casting part;

Step c) calculating the flow distances of the aluminum alloy melt at each sampling point, wherein the flow distance means the distance through which the aluminum alloy melt flows from an outlet of the injection chamber to the sampling point of the casting part along a runner of the casting die during the mega casting; and

Step d) measuring the mechanical property parameters of the casting part at each sampling point, wherein said mechanical property parameters are one or more selected from ultimate tensile strength, yield strength, elongation at break and Brinell hardness;

Step e) fitting function(s) between the mechanical property parameters and the flow distance by multiple regression, based on the flow distances obtained from Step c) and the mechanical property parameters obtained from Step d) at each sampling point, and

Step f) predicting the mechanical properties of other casting parts produced through the casting die at each sampling point, based on the flow distances and the function(s) between the mechanical property parameters and the flow distance, wherein the other casting parts come from different production batches from that of the casting part in Step a).

In an embodiment of the present invention, the function(s) between the mechanical property parameters and the flow distances fitted in Step e) is one or more of the following equations:

i)

$$\text{Equation 1: } UTS = a1 - a2 * FD + a3 * FD^2,$$

wherein UTS represents the ultimate tensile strength, unit: MPa; and FD represents the flow distance of the aluminum alloy melt, unit: m;

ii)

$$\text{Equation 2: } YS = b1 + b2 * HIS - b3 * FD + b4 * FD^2,$$

wherein YS represents the yield strength, unit: MPa; HIS represents the average speed of high-speed injection of a pressing die, unit: m/s; and FD represents the flow distance of the aluminum alloy melt, unit: m;

iii)

$$\text{Equation 3: } EI = c1 - c2 * FD,$$

wherein EI represents the elongation at break, unit: %; and FD represents the low distance of the aluminum alloy melt, unit: m;

iv)

$$\text{Equation 4: } H = d1 - d2 * FD + d3 * FD^2,$$

wherein H represents the Brinell hardness, unit: HBW; and FD represents the flow distance of the aluminum alloy melt, unit: m;

wherein a1, a2, a3, b1, b2, c1, c2, d1, d2 and d3 are coefficients.

As a preferable embodiment of the present invention, the coefficients a1, a2, a3, b 1, b2, c1, c2, d1, d2 and d3 are determined through specific experiments and/or simulations.

In the context of the present invention, the values modified by the word "about" indicate that the modified values can fluctuate by 10% up or down. For example, "about 2 meters" represents a range of $2 \pm 0.2$ meters. According to Equation 1 to Equation 4, the accuracy of the predicted value as calculated is 95%, and an error of no more than 5% is within the acceptable error range for the predicted value.

According to the present invention, Step a), Step b), Step c), Step d), Step e) and f) are carried out sequentially.

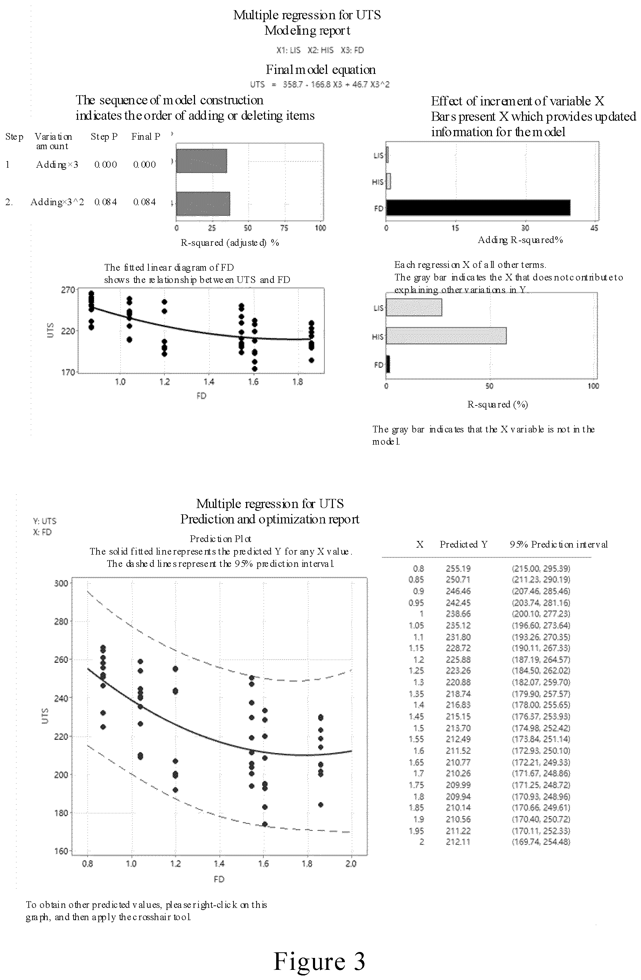

In an embodiment of the present invention, the same casting die is used. During the die casting of 8 batches of casting parts, the injection speeds of the pressing head in the first phase, the second phase and the third phase are adjusted according to Table 1 below. On each of the 8 batches of the casting parts produced, 6-8 points were selected, thus about 50-60 sampling points are selected in total. Relationship curves of the ultimate tensile strength, the yield strength, the elongation at break, and the Brinell hardness of the casting parts versus the flow distance of the aluminum alloy melt are fitted according to the prediction method of the present invention, and are shown in FIG. 3, FIG. 4, FIG. 5, and FIG. 6, respectively.

Table 1. Casting process parameters for the casting parts from different batches

| Batch No. of Casting Part | Injection Speed | | |
|---|---|---|---|
| | First Stage (Stroke: 0 to about 800 mm) | Second Stage (Stroke: about 800 to 1480 mm) | Third Stage (Stroke: about 1480 to 1620 mm) |
| 1 | N | N | N |
| 2 | L | N | N |
| 3 | L | L | L |
| 4 | H | L | N |
| 5 | N | N | H |

(continued)

| Batch No. of Casting Part | Injection Speed | | |
|---|---|---|---|
| | First Stage (Stroke: 0 to about 800 mm) | Second Stage (Stroke: about 800 to 1480 mm) | Third Stage (Stroke: about 1480 to 1620 mm) |
| 6 | H | N | N |
| 7 | H | H | N |
| 8 | H | H | H |
| Note: Stroke represents the distance between the pressing head and the inlet of the injection chamber; L represents a low-speed injection speed, and is from about 0.18 to less than about 0.38 m/s on average; N represents a nominal injection speed, and is from about 0.38 to about 5.7 m/s on average; and H represents a high-speed injection speed, and is from about 5.7 to about 7 m/s on average. | | | |

FIG. 3 illustrates a multiple regression modeling report for the ultimate tensile strength. The following steps are performed sequentially: Step a) producing the rear floor of an automobile as shown in FIG. 1 by mega casting an aluminum alloy melt; Step b) selecting 6-8 sampling points on each of the casting parts from the 8 batches as shown in Table 1 by using the Flow 3D software; Step c) calculating the flow distance FD of the aluminum alloy melt at each sampling point by using the Flow 3D software; Step d) measuring the ultimate tensile strength UTS at each sampling point by using a universal testing machine; and Step e) based on the flow distance FD obtained from Step c) and the ultimate tensile strength UTS obtained from Step d) at each sampling point, Equation 1 is fitted through multiple regression by using a Minitab software: $UTS=358.7-166.8*FD+46.7*FD^2$, wherein the UTS represents ultimate tensile strength, unit: MPa; and FD represents flow distance of the aluminum alloy melt, and FD is from about 0.8 to 2 m. In Step e), besides the two parameters of the ultimate tensile strength UTS and the flow distance FD, two additional parameters of HIS and LIS are also inputted to the Minitab software, wherein HIS represents the average speed of high-speed injection of the pressing head, and HIS is more than about 5.7 but no more than about 7 m/s; LIS represents the average speed of low-speed injection of the pressing head, and LIS is from about 0.18 to less than about 0.38 m/s. First, upon performing multiple regression screening and fitting by using the Minitab software, it is observed that the ultimate tensile strength UTS is not highly correlated with both the average speed of high-speed injection HIS and the average speed of low-speed injection LIS, but the ultimate tensile strength UTS is correlated with both the flow distance FD and the square of the flow distance $FD^2$. Next, the curves of the ultimate tensile strength UTS versus the flow distance FD and the square of the flow distance $FD^2$ are fitted by using the Minitab software to obtain Equation 1: $UTS=358.7-166.8*FD+46.7*FD^2$. It can be seen from the fitted curves in FIG. 3 that, when the flow distance FD varies within the range of from about 0.8 to 2 m, the ultimate tensile strength UTS of the casting part decreases with the increase of the flow distance FD.

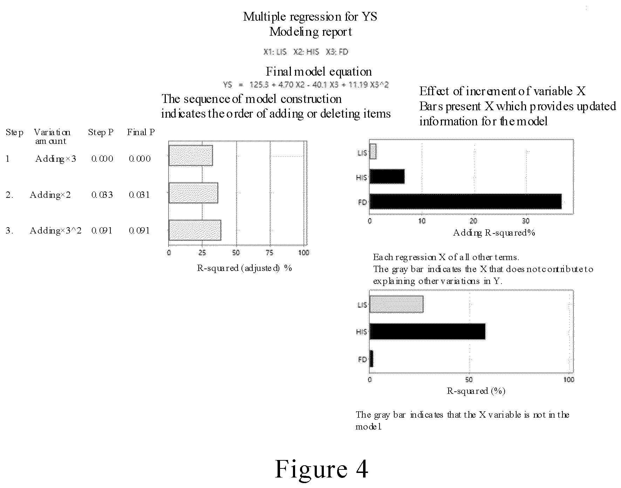

FIG. 4 illustrates a multiple regression modeling report for the yield strength. The following steps are performed sequentially: Step a) producing the rear floor of an automobile as shown in FIG. 1 by mega casting an aluminum alloy melt; Step b) selecting 6-8 sampling points on each of the casting parts from the 8 batches as shown in Table 1 by using the Flow 3D software; Step c) calculating the flow distance FD of the aluminum alloy melt at each sampling point by using the Flow 3D software; Step d) measuring the yield strength YS at each sampling point by using a universal testing machine; and Step e) based on the flow distance FD obtained from Step c) and the yield strength YS obtained from Step d) at each sampling point, Equation 2 is fitted through multiple regression by using Minitab software: $YS=125.3+4.7*HIS-40.1*FD+11.19*FD^2$, wherein YS represents Yield strength, unit: MPa; HIS represents the average speed of high-speed injection of the pressing head, and HIS is more than about 5.7 but no more than about 7 m/s; and FD represents flow distance of the aluminum alloy melt, and FD is from about 0.8 to 2 m. In Step e), besides the two parameters of the yield strength YS and the flow distance FD, two additional parameters of HIS and LIS are also inputted to the Minitab software, wherein HIS represents the average speed of high-speed injection of the pressing head, and HIS is more than about 5.7 but no more than about 7 m/s; LIS represents the average speed of low-speed injection of the pressing head, and LIS is from about 0.18 to less than about 0.38 m/s. First, upon performing multiple regression screening and fitting by using Minitab software, it is observed that the yield strength YS is not highly correlated with the LIS, but the yield strength YS is correlated with the average speed of high-speed injection HIS, the flow distance FD and the square of the flow distance $FD^2$. Next, the curves of the yield strength YS versus the average speed of high-speed injection HIS, the flow distance FD and the square of the flow distance $FD^2$ are fitted by using the Minitab software to obtain Equation 2: $YS=125.3+4.7*HIS-40.1*FD+11.19*FD^2$. In FIG. 4, when the "Effect of increment of variable X" is analyzed, the yield strength YS of the casting part is not significantly affected by the average speed of high-speed injection HIS as compared with the effect of the flow distance FD, as shown by the length of the black bar.

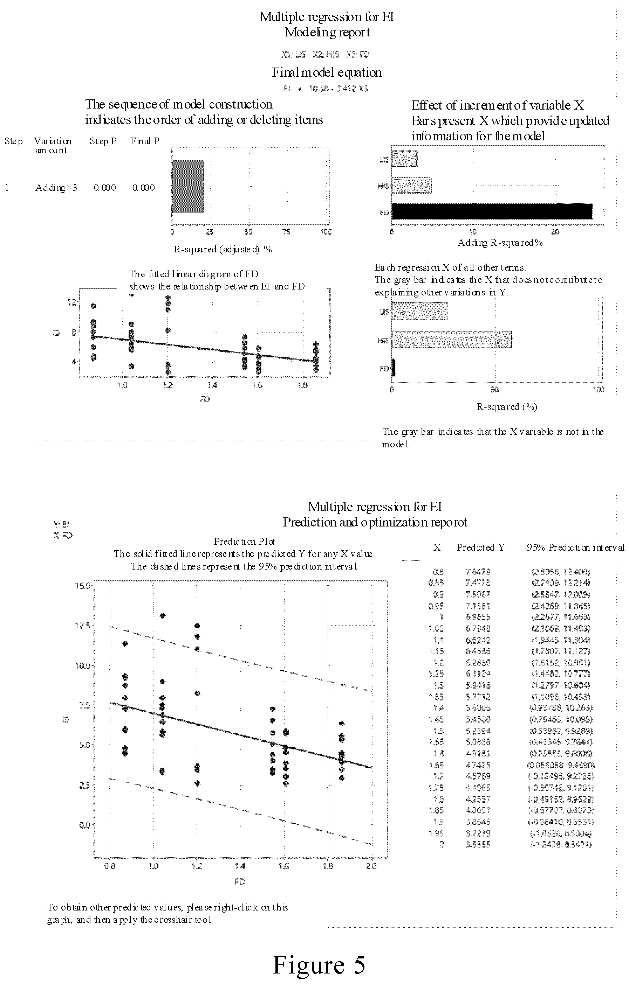

FIG. 5 illustrates a multiple regression modeling report for the elongation at break. The following steps are performed sequentially: Step a) producing the rear floor of an automobile as shown in FIG. 1 by mega casting an aluminum alloy melt; Step b) selecting 6-8 sampling points on each of the casting parts from the 8 batches as shown in Table 1 by using the Flow 3D software; Step c) calculating the flow distance FD of the aluminum alloy melt at each sampling point by using the Flow 3D software; Step d) measuring the elongation at break EI at each sampling point by using a universal testing machine; and Step e) based on the flow distance FD obtained from Step c) and the elongation at break EI obtained from Step d) at each sampling point, Equation 3 is fitted through multiple regression by using Minitab software: EI=10.38-3.412*FD, wherein EI represents elongation at break, unit: %; and FD represents flow distance of the aluminum alloy melt, and FD is from about 0.8 to 2 m.. In Step e), besides the two parameters of the elongation at break EI and the flow distance FD, two additional parameters of HIS and LIS are also inputted to the Minitab software, wherein HIS represents the average speed of high-speed injection of the pressing head, and HIS is more than about 5.7 but no more than about 7 m/s; LIS represents the average speed of low-speed injection of the pressing head, and LIS is from about 0.18 to less than about 0.38 m/s. First, upon performing multiple regression screening and fitting by using Minitab software, it is observed that the elongation at break EI is not highly correlated with both the average high speed injection speed HIS and the average low speed injection speed LIS, but the elongation at break EI is correlated with the flow distance FD. Next, the curve of the elongation at break EI versus the flow distance FD is fitted by using the Minitab software to obtain Equation 3: EI=10.38-3.412*FD. It can be seen from the fitted curves in FIG. 5 that, when the flow distance FD varies within the range of from about 0.8 to 2 m, the elongation at break EI of the casting part tends to linearly decrease with the increase of the flow distance FD.

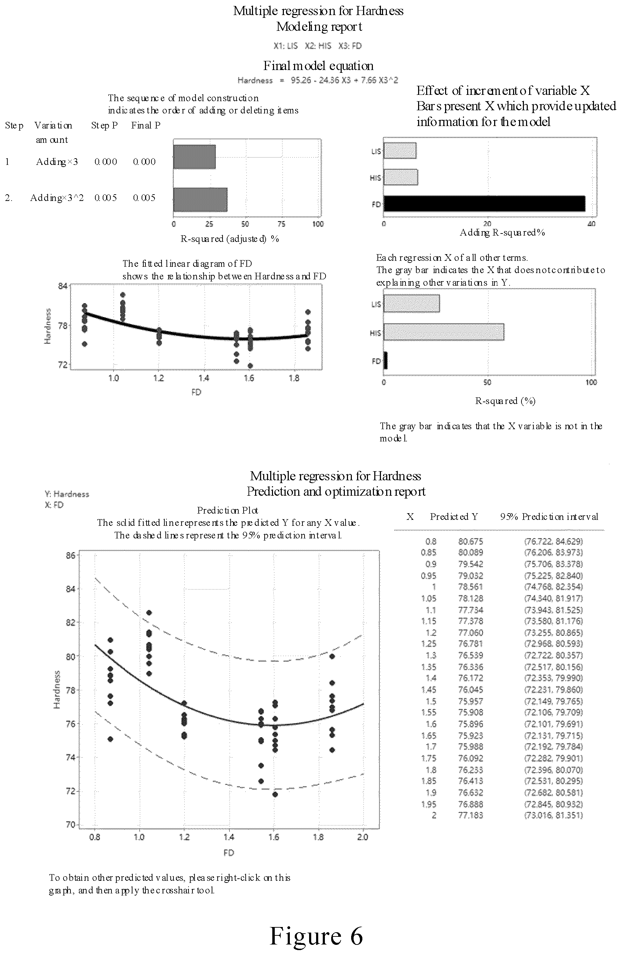

FIG. 6 illustrates a multiple regression modeling report for the Brinell hardness. The following steps are performed sequentially: Step a) producing the rear floor of an automobile as shown in FIG. 1 by mega casting an aluminum alloy melt; Step b) selecting 6-8 sampling points on each of the casting parts from the 8 batches as shown in Table 1 by using the Flow 3D software; Step c) calculating the flow distance FD of the aluminum alloy melt at each sampling point by using the Flow 3D software; Step d) measuring the Brinell hardness at each sampling point by using a universal testing machine; and Step e) based on the flow distance FD obtained from Step c) and the Brinell hardness H obtained from Step d) at each sampling point, Equation 4 is fitted through multiple regression by using Minitab software: H= 95.26-24.36*FD+7.66*FD$^2$, wherein H represents the Brinell hardness, unit: HBW; and FD represents the flow distance of the aluminum alloy melt, and FD is from about 0.8 to 2 m. In Step e), besides the two parameters of the Brinell hardness H and the flow distance FD, two additional parameters of HIS and LIS are also inputted to the Minitab software, wherein HIS represents the average speed of high-speed injection of the pressing head, and HIS is more than about 5.7 but no more than about 7 m/s; LIS represents the average speed of low-speed injection of the pressing head, and LIS is from about 0.18 to less than about 0.38 m/s. First, upon performing multiple regression screening and fitting by using Minitab software, it is observed that the Brinell hardness H is not highly correlated with both the average speed of high-speed injection HIS and the average speed of low-speed injection LIS, but the Brinell hardness H is correlated with both the flow distance FD and the square of the flow distance FD$^2$. Next, the curves of the Brinell hardness H versus the flow distance FD and the square of the flow distance FD$^2$ are fitted by using Minitab software to obtain Equation 4: H= 95.26-24.36*FD+7.66*FD$^2$. It can be seen from the fitted curves in FIG. 6 that, when the flow distance FD varies within the range of from about 0.8 to 1.6 m, the Brinell hardness H decreases with the increase of the flow distance FD; when the flow distance FD varies within the range of from about 1.6 to 2.0 m, the Brinell hardness H increases with the increase of the flow distance FD.

During the multiple regression fitting process as shown in FIG 3 to FIG 6, the inventors found that, the relationships between the physical properties parameters (such as ultimate tensile strength, yield strength, elongation at break, and Brinell hardness) and different injection speeds are discrete, which means that there is no apparent and intuitive relationship between these physical properties parameters and the injection speed. The present inventors further found that, the physical properties parameters such as ultimate tensile strength, yield strength, elongation at break, and Brinell hardness are more sensitive to the effect of the flow distance than to the injection speeds; when the flow distance varies within the range of from about 0.8 to 2.0 m, the ultimate tensile strength, yield strength, and elongation at break tend to decrease with the increase of the flow distance FD; when the flow distance varies within the range of from about 0.8 to 1.6 m, the Brinell hardness decreases with the increase of the flow distance FD; and when the flow distance varies within the range of from about 1.6 to 2.0 m, the Brinell hardness increases with the increase of the flow distance FD.

As a preferable embodiment of the present invention, in Step b), when the sampling points are selected, the selected casting part is flat and is formed by the aluminum alloy melt along the same injection direction. The samples of casting parts selected according to such a criterion can avoid uneven panels, and avoid the interference from different injection directions on the mechanical properties tested in the following Step d), which will ultimately affect the accuracy of the fitted equation in Step e).

As a preferable embodiment of the present invention, in Step a), different batches of casting parts are produced by varying the speed of the pressing head at the three phases of the stroke. In step b), the casting samples are selected from different batches. For each batch of the casting parts, 4-15 sampling points, preferably 5-10 sampling points, and more preferably 6-8 sampling points are selected, respectively. There is no specific requirement for the sampling, as long as the sampling points are uniformly distributed along the flow distance and avoid the positions of complex structures. The more batches the casting samples come from and the more points are selected on the casting samples, the more accurate the fitting equation(s) is and the more reliable the prediction results of the properties of the casting parts are.

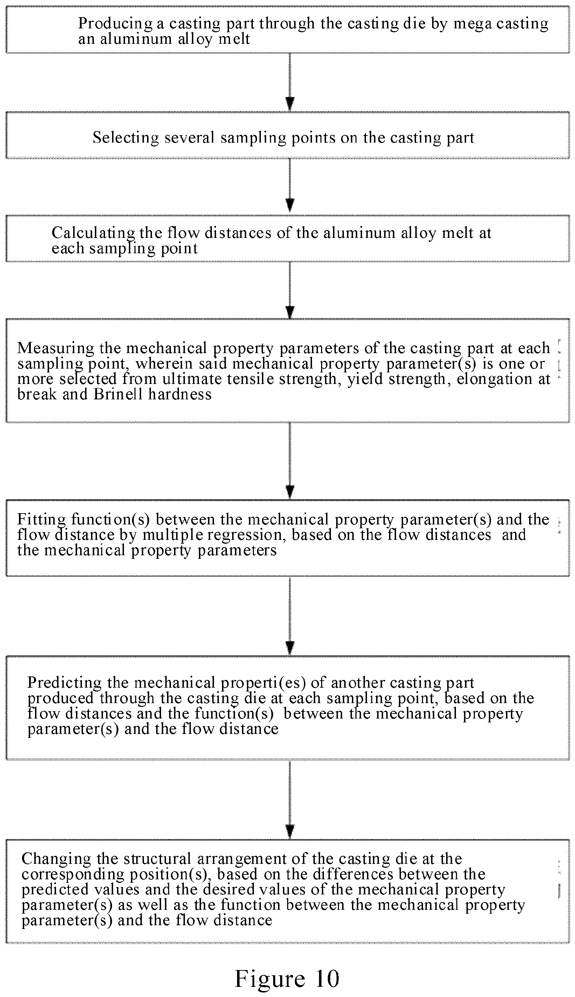

FIG. 10 is a flow chart of the method for designing a casting die for mega casting according to an embodiment of the present invention. As shown in FIG. 10, in an embodiment of the present invention, provided is a method for designing a casting die for mega casting, characterized in that the method comprises the following steps:

predicting the mechanical property parameters of the casting part at each sampling point according to the method for predicting the mechanical properties of a casting part based on the flow distances of an aluminum alloy melt according to the present invention; and

changing the structural arrangement of the casting die at the corresponding positions, based on the differences between the predicted values and the desired values of the mechanical property parameters. Thereby, the flow distances of the aluminum alloy melt at the sampling points can be changed, so that the casting parts produced through the casting die have the desired values of the mechanical property parameters at the sampling points, and the correction and optimization of the mechanical properties of the products are realized.

In another embodiment of the present invention, provided is an aluminum alloy casting part produced through the casting die for mega casting designed according to the present invention. Since the structure of the die designed according to the method of the present invention is changed and adjusted, the flow distances of the aluminum alloy melt at the sampling points are changed, so that the casting parts produced through the casting die have the desired values of the mechanical property parameters at the sampling points, and the products thus produced have corrected and optimized mechanical properties.

As a preferable embodiment of the present invention, by providing one or more local arrangements, for example, barriers, corners, and/or guiding means, such as ribs, reinforcing ribs and/or convex hulls, the structure of the casting die, in particular the arrangement of the runner is changed, thereby the flow path of the aluminum alloy melt within the casting die is influenced, and the mechanical properties of the casting part produced through the casting die are in turn changed.

In addition, the local thickness of the product produced through the casting die can be changed by changing the runner depth or the cavity depth of the casting die, thereby the performances of the product at that position are optimized. As previously stated, the casting die has a relatively flat runner, and the aluminum alloy melt spreads over the runner of the casting die at a thickness of from about 3 to 4 mm, and the casting part produced through the casting die also has a thickness of from about 3 to 4 mm. Since the casting part has an extremely thin thickness with respect to its length (from about 0.8 to 2 m) and width (from greater than 0 to about 2 m) of the casting, when a casting die is designed, preferably, the flow path of the aluminum alloy melt in the runner is mainly adjusted, while the runner depth or the cavity depth may be adjusted or may not be adjusted.

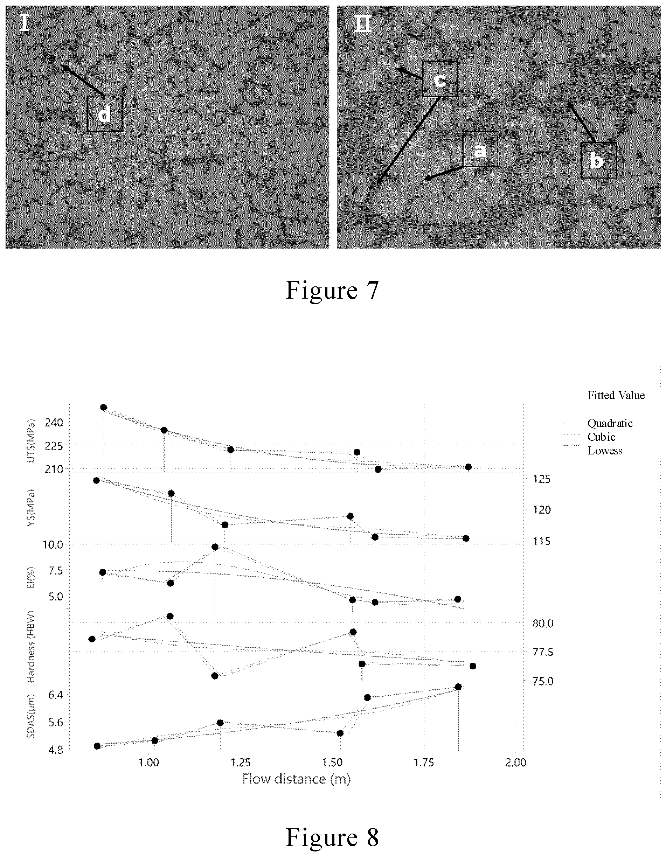

FIG. 7 illustrates the metallograph of the mega casting part at the sampling point N2 selected at a position with the flow distance of about 1 to 1.2 m on the casting part according to an embodiment of the present invention. The figure on the left (I) and figure on the right (II) represent the microstructure at 500x and 1000x magnification, respectively. The letter a represents an α-aluminum phase, the letter b represents an eutectic silicon structure, the letter c represents an intermetallic compound (e.g., Fe-Mn, Mg-Si), and the letter d represents casting defects (e.g., pores and oxide inclusion). The larger the secondary dendrite arm spacing is, the coarser the dendritic structure is, which represents a rougher microstructure and worse mechanical properties of the casting part.

As shown in the Table 2 below, besides the sampling point N2 as shown in FIG. 7, three additional sampling points N1, N3 and N4 are selected at different flow distances on the same casting part. Secondary dendrite arm spacing SDASs (μm) are measured for the four sampling points, respectively, and the results are reported in the Table 2 below.

Table 2

| No. of Sampling Point | Flow Distance (m) | Average Secondary dendrite arm spacing SDAS (μm) |
|---|---|---|
| N1 | 0.8-1 | 4.9 |
| N2 | 1-1.2 | 5.1 |
| N3 | 1.2-1.5 | 5.6 |
| N4 | 1.8-2 | 6.6 |

It can be seen from the above Table 2, when the flow distance varies within the range of from about 0.8 to 2 m, the average secondary dendrite arm spacing SDAS increases with the increase of the flow distance FD, which is consistent with the conclusions drawn from FIG. 3 to FIG. 6. That is to say, As the flow distance FD increases, the casting part becomes rougher and the mechanical properties are deteriorated.

FIG. 8 shows the fitted curves of the four parameters (ultimate tensile strength UTS (MPa), yield strength (MPa), elongation at break EI (%), Brinell hardness H (HBW), and secondary dendrite arm spacing SDAS ($\mu$m)) versus the flow distance FD, respectively, wherein these four parameters are measured at each of the 6 sampling points with different flow distances on the same casting part according to an embodiment of the present invention.

As shown in FIG. 8, as the flow distance increases from about 0.8 to 2 m, the secondary dendrite arm spacing increases. Consistently, the ultimate tensile strength UTS (MPa), yield strength (MPa), elongation at break EI (%) and the hardness (HEW) all tend to deteriorate with the increase of the flow distance.

As a preferred embodiment of the present invention, the aluminum alloy is an aluminum-silicon alloy.

As a preferred embodiment of the present invention, based on the total weight of the aluminum alloy, the aluminum alloy comprises:

about 7.6-about 8.5 wt% of silicon.

0-about 0.15 wt% of iron.

about 0.5-about 0.6 wt% of manganese.

about 0.2-about 0.25 wt% of magnesium,

about 0.07-about 0.15 wt% of titanium.

about 0.018-about 0.022 wt% of strontium, and

the balance being aluminum.

Such aluminum alloys can not only eliminate heat treatment, but also have high strength and toughness, and are suitable for use in the method of predicting the mechanical properties of the casting part and the method for designing a casting die according to the present invention, so as to provide large components produced by mega casting which have high volumes and thin walls.

Although not explicitly enumerated, however, according to the method of the present invention, the aluminum alloy may contain other impurities, wherein the impurities are inevitably present due to the source or the production process of the aluminum alloy material, or the impurities are deliberately doped into the aluminum alloy for the purpose of improving the properties of the casting parts, as long as they do not affect the effect of the present invention.

According to the method of the present invention, fewer types of elements need to be deliberately added, in particular no rare earth elements need to be deliberately added, as compared with other heat-free treatment or non-heat-treatable aluminum-silicon alloys commonly used for mega casting.

As a preferred embodiment of the present invention, the aluminum alloy has a melting temperature of about 740°C.

As a preferred embodiment of the present invention, the deslagging agent is a potassium-based and sodium-free deslagging agent. Based on the weight of the aluminum alloy, the deslagging agent can be used in an amount of about 0.5 wt%.

As a preferred embodiment of the present invention, the aluminum alloy is degassed in $N_2$ for about 15 minutes.

As a preferred embodiment of the present invention, the aluminum alloy is strontium modified, for example, by adding $AlSr_{10}$ with a density of 2.64 to the aluminum alloy for strontium modification.

The method for predicting the mechanical properties of casting parts and the method for designing casting dies according to the present invention are applicable to automobile bodies including automobile floors, such as front cabins, rear floors and center floors.

Although particular embodiments of the present invention are disclosed herein in detail, they are merely examples set forth for the purpose of illustration and should not be considered as limiting the scope of the present invention as defined in the claims. Various substitutions, variations and modifications may be conceived without departing from the spirit and scope of the present invention as defined in the claims.

**Claims**

1. A method for predicting the mechanical properties of a casting part based on the flow distances of an aluminum alloy melt, **characterized in that** the method comprises the following steps:

   Step a) producing a casting part through the casting die by mega casting an aluminum alloy melt;

Step b) selecting several sampling points on the casting part;

Step c) calculating the flow distances of the aluminum alloy melt at each sampling point, wherein the flow distance means the distance through which the aluminum alloy melt flows from an outlet of the injection chamber to the sampling point of the casting part along a runner of the casting die during the mega casting; and

Step d) measuring the mechanical property parameters of the casting part at each sampling point, wherein said mechanical property parameters are one or more selected from ultimate tensile strength, yield strength, elongation at break and Brinell hardness;

Step e) fitting function(s) between the mechanical property parameters and the flow distances by multiple regression, based on the flow distances obtained from Step c) and the mechanical property parameters obtained from Step d) at each sampling point, and

Step f) predicting the mechanical properties of other casting parts produced through the casting die at each sampling point, based on the flow distances and the function(s) between the mechanical property parameters and the flow distances, wherein the other casting parts come from different production batches from that of the casting part in Step a).

2. The method according to claim 1, wherein the function(s) between the mechanical property parameters and the flow distances fitted in Step e) is one or more of the following equations:

i)

$$\text{Equation 1: } UTS = a_1 - a_2*FD + a_3*FD^2,$$

wherein UTS represents the ultimate tensile strength, unit: MPa; and FD represents the flow distance of the aluminum alloy melt, unit: m;

ii)

$$\text{Equation 2: } YS = b_1 + b_2*HIS - b_3*FD + b_4*FD^2,$$

wherein YS represents the yield strength, unit: MPa; HIS represents the average speed of high-speed injection of a pressing die, unit: m/s; and FD represents the flow distance of the aluminum alloy melt, unit: m;

iii)

$$\text{Equation 3: } EI = c_1 - c_2*FD,$$

wherein EI represents the elongation at break, unit: %; and FD represents the low distance of the aluminum alloy melt, unit: m;

iv)

$$\text{Equation 4: } H = d_1 - d_2*FD + d_3*FD^2,$$

wherein H represents the Brinell hardness, unit: HBW; and FD represents the flow distance of the aluminum alloy melt, unit: m;

wherein a1, a2, a3, b1, b2, c1, c2, d1, d2 and d3 are coefficients.

3. The method according to claim 2, wherein the FD is 0.8-2 m.

4. The method according to any one of claims 2 to 3, wherein the HIS is more than 5.7 but no more than 7 m/s.

5. The method according to any one of claims 1 to 4, wherein in Step b), 4-15 sampling points, preferably 5-10 sampling points, and more preferably 6-8 sampling points are selected.

6. The method according to any one of claims 1 to 5, wherein in Step b), the sampling points are selected by using a moldflow analysis software.

7. The method according to any one of claims 1 to 6, wherein in Step c), the flow distances of the aluminum alloy melt at each sampling point are calculated by using a moldflow analysis software.

8. The method according to any one of claims 1 to 7, wherein in Step d), the mechanical property parameters of the casting part at each sampling point are measured by using a universal testing machine.

9. The method according to any one of claims 1 to 8, wherein in Step e), the fitting is performed by using the Minitab software.

10. The method according to any one of claims 2 to 9, wherein in Step e), 2, 3 or 4 of Equation 1, Equation 2, Equation 3 and Equation 4 are fitted, and
Preferably, Equation 1, Equation 2, Equation 3 and Equation 4 are fitted.

11. A method for designing a casting die for mega casting, comprising the following steps:

   predicting the mechanical property parameters of the casting part at each sampling point according to the method of any one of claims 1 to 10, based on the flow distances and the function(s) between the mechanical property parameters and the flow distances; and
   changing the structural arrangement of the casting die at the corresponding positions, based on the differences between the predicted values and the desired values of the mechanical property parameters as well as the function(s) between the mechanical property parameters and the flow distances.

12. The method according to claim 11, wherein the changing the structural arrangement of the casting die at the corresponding positions is changing the runner arrangement of the casting die at the corresponding positions; preferably, the runner arrangement of the casting die is changed by the following means: providing one or more barriers, corners, and/or guiding means.

13. The method according to any one of claims 1 to 12, wherein the aluminum alloy is an aluminum-silicon alloy; preferably, based on the total weight of the aluminum alloy, the aluminum alloy comprises:

   7.6-8.5 wt% of silicon.
   0-0.15 wt% of iron.
   0.5-0.6 wt% of manganese.
   0.2-0.25 wt% of magnesium,
   0.07-0.15 wt% of titanium.
   0.018-0.022 wt% of strontium, and
   the balance being aluminum.

14. An aluminum alloy casting part produced through the casting die for mega casting designed according to the method of any one of claims 11 to 13.

Figure 1

Figure 2

Multiple regression for UTS
Modeling report

X1: LIS  X2: HIS  X3: FD

Final model equation

UTS = 358.7 - 166.8 X3 + 46.7 X3^2

The sequence of model construction
indicates the order of adding or deleting items

Effect of increment of variable X
Bars present X which provides updated
information for the model

| Step | Variation amount | Step P | Final P |
|------|------------------|--------|---------|
| 1 | Adding×3 | 0.000 | 0.000 |
| 2. | Adding×3^2 | 0.084 | 0.084 |

R-squared (adjusted) %

Adding R-squared%

The fitted linear diagram of FD
shows the relationship between UTS and FD

Each regression X of all other terms.
The gray bar indicates the X that does not contribute to
explaining other variations in Y.

R-squared (%)

The gray bar indicates that the X variable is not in the
model.

Multiple regression for UTS
Prediction and optimization report

Y: UTS
X: FD

Prediction Plot
The solid fitted line represents the predicted Y for any X value.
The dashed lines represent the 95% prediction interval.

| X | Predicted Y | 95% Prediction interval |
|------|-------------|-------------------------|
| 0.8 | 255.19 | (215.00, 295.39) |
| 0.85 | 250.71 | (211.23, 290.19) |
| 0.9 | 246.46 | (207.46, 285.46) |
| 0.95 | 242.45 | (203.74, 281.16) |
| 1 | 238.66 | (200.10, 277.23) |
| 1.05 | 235.12 | (196.60, 273.64) |
| 1.1 | 231.80 | (193.26, 270.35) |
| 1.15 | 228.72 | (190.11, 267.33) |
| 1.2 | 225.88 | (187.19, 264.57) |
| 1.25 | 223.26 | (184.50, 262.02) |
| 1.3 | 220.88 | (182.07, 259.70) |
| 1.35 | 218.74 | (179.90, 257.57) |
| 1.4 | 216.83 | (178.00, 255.65) |
| 1.45 | 215.15 | (176.37, 253.93) |
| 1.5 | 213.70 | (174.98, 252.42) |
| 1.55 | 212.49 | (173.84, 251.14) |
| 1.6 | 211.52 | (172.93, 250.10) |
| 1.65 | 210.77 | (172.21, 249.33) |
| 1.7 | 210.26 | (171.67, 248.86) |
| 1.75 | 209.99 | (171.25, 248.72) |
| 1.8 | 209.94 | (170.93, 248.96) |
| 1.85 | 210.14 | (170.66, 249.61) |
| 1.9 | 210.56 | (170.40, 250.72) |
| 1.95 | 211.22 | (170.11, 252.33) |
| 2 | 212.11 | (169.74, 254.48) |

To obtain other predicted values, please right-click on this
graph, and then apply the crosshair tool.

# Figure 3

Multiple regression for YS
Modeling report

X1: LIS   X2: HIS   X3: FD

Final model equation

YS  =  125.3 + 4.70 X2 - 40.1 X3 + 11.19 X3^2

The sequence of model construction
indicates the order of adding or deleting items

Effect of increment of variable X
Bars present X which provides updated
information for the model

| Step | Variation amount | Step P | Final P |
|---|---|---|---|
| 1 | Adding×3 | 0.000 | 0.000 |
| 2. | Adding×2 | 0.033 | 0.031 |
| 3. | Adding×3^2 | 0.091 | 0.091 |

R-squared (adjusted) %

Adding R-squared%

Each regression X of all other terms.
The gray bar indicates the X that does not contribute to
explaining other variations in Y.

R-squared (%)

The gray bar indicates that the X variable is not in the
model.

# Figure 4

Multiple regression for EI
Modeling report

X1: LIS  X2: HIS  X3: FD

Final model equation
EI = 10.38 - 3.412 X3

**The sequence of model construction indicates the order of adding or deleting items**

| Step | Variation amount | Step P | Final P |
|------|------------------|--------|---------|
| 1 | Adding ×3 | 0.000 | 0.000 |

R-squared (adjusted) %

The fitted linear diagram of FD shows the relationship between EI and FD

**Effect of increment of variable X Bars present X which provide updated information for the model**

Adding R-squared %

Each regression X of all other terms.
The gray bar indicates the X that does not contribute to explaining other variations in Y.

R-squared (%)

The gray bar indicates that the X variable is not in the model.

Multiple regression for EI
Prediction and optimization report

Y: EI
X: FD

Prediction Plot
The solid fitted line represents the predicted Y for any X value.
The dashed lines represent the 95% prediction interval.

| X | Predicted Y | 95% Prediction interval |
|------|------------|-------------------------|
| 0.8 | 7.6479 | (2.8956, 12.400) |
| 0.85 | 7.4773 | (2.7409, 12.214) |
| 0.9 | 7.3067 | (2.5847, 12.029) |
| 0.95 | 7.1361 | (2.4269, 11.845) |
| 1 | 6.9655 | (2.2677, 11.663) |
| 1.05 | 6.7948 | (2.1069, 11.483) |
| 1.1 | 6.6242 | (1.9445, 11.304) |
| 1.15 | 6.4536 | (1.7807, 11.127) |
| 1.2 | 6.2830 | (1.6152, 10.951) |
| 1.25 | 6.1124 | (1.4482, 10.777) |
| 1.3 | 5.9418 | (1.2797, 10.604) |
| 1.35 | 5.7712 | (1.1096, 10.433) |
| 1.4 | 5.6006 | (0.93788, 10.263) |
| 1.45 | 5.4300 | (0.76463, 10.095) |
| 1.5 | 5.2594 | (0.58982, 9.9289) |
| 1.55 | 5.0888 | (0.41345, 9.7641) |
| 1.6 | 4.9181 | (0.23553, 9.6008) |
| 1.65 | 4.7475 | (0.056058, 9.4390) |
| 1.7 | 4.5769 | (-0.12495, 9.2788) |
| 1.75 | 4.4063 | (-0.30748, 9.1201) |
| 1.8 | 4.2357 | (-0.49152, 8.9629) |
| 1.85 | 4.0651 | (-0.67707, 8.8073) |
| 1.9 | 3.8945 | (-0.86410, 8.6531) |
| 1.95 | 3.7239 | (-1.0526, 8.5004) |
| 2 | 3.5533 | (-1.2426, 8.3491) |

To obtain other predicted values, please right-click on this graph, and then apply the crosshair tool.

# Figure 5

## Multiple regression for Hardness
## Modeling report

X1: LIS  X2: HIS  X3: FD

### Final model equation

Hardness = 95.26 - 24.36 X3 + 7.66 X3^2

The sequence of model construction
indicates the order of adding or deleting items

Effect of increment of variable X
Bars present X which provide updated
information for the model

| Step | Variation amount | Step P | Final P |
|------|------------------|--------|---------|
| 1 | Adding×3 | 0.000 | 0.000 |
| 2. | Adding×3^2 | 0.005 | 0.005 |

R-squared (adjusted) %

Adding R-squared%

The fitted linear diagram of FD
shows the relationship between Hardness and FD

Each regression X of all other terms.
The gray bar indicates the X that does not contribute to
explaining other variations in Y.

R-squared (%)

The gray bar indicates that the X variable is not in the
model.

## Multiple regression for Hardness
## Prediction and optimization report

Y: Hardness
X: FD

Prediction Plot
The solid fitted line represents the predicted Y for any X value.
The dashed lines represent the 95% prediction interval.

| X | Predicted Y | 95% Prediction interval |
|------|-------------|-------------------------|
| 0.8 | 80.675 | (76.722, 84.629) |
| 0.85 | 80.089 | (76.206, 83.973) |
| 0.9 | 79.542 | (75.706, 83.378) |
| 0.95 | 79.032 | (75.225, 82.840) |
| 1 | 78.561 | (74.768, 82.354) |
| 1.05 | 78.128 | (74.340, 81.917) |
| 1.1 | 77.734 | (73.943, 81.525) |
| 1.15 | 77.378 | (73.580, 81.176) |
| 1.2 | 77.060 | (73.255, 80.865) |
| 1.25 | 76.781 | (72.968, 80.593) |
| 1.3 | 76.539 | (72.722, 80.357) |
| 1.35 | 76.336 | (72.517, 80.156) |
| 1.4 | 76.172 | (72.353, 79.990) |
| 1.45 | 76.045 | (72.231, 79.860) |
| 1.5 | 75.957 | (72.149, 79.765) |
| 1.55 | 75.908 | (72.106, 79.709) |
| 1.6 | 75.896 | (72.101, 79.691) |
| 1.65 | 75.923 | (72.131, 79.715) |
| 1.7 | 75.988 | (72.192, 79.784) |
| 1.75 | 76.092 | (72.282, 79.901) |
| 1.8 | 76.233 | (72.396, 80.070) |
| 1.85 | 76.413 | (72.531, 80.295) |
| 1.9 | 76.632 | (72.682, 80.581) |
| 1.95 | 76.888 | (72.845, 80.932) |
| 2 | 77.183 | (73.016, 81.351) |

To obtain other predicted values, please right-click on this
graph, and then apply the crosshair tool.

# Figure 6

Figure 7

Figure 8

Producing a casting part through the casting die by mega casting an aluminum alloy melt

Selecting several sampling points on the casting part

Calculating the flow distances of the aluminum alloy melt at each sampling point

Measuring the mechanical property parameters of the casting part at each sampling point, wherein said mechanical property parameters are one or more selected from ultimate tensile strength, yield strength, elongation at break and Brinell hardness

Fitting function(s) between the mechanical property parameters and the flow distances by multiple regression, based on the flow distances and the mechanical property parameters

Predicting the mechanical properties of other casting parts produced through the casting die at each sampling point, based on the flow distances and the function(s) between the mechanical property parameters and the flow distances

Figure 9

Producing a casting part through the casting die by mega casting an aluminum alloy melt

Selecting several sampling points on the casting part

Calculating the flow distances of the aluminum alloy melt at each sampling point

Measuring the mechanical property parameters of the casting part at each sampling point, wherein said mechanical property parameter(s) is one or more selected from ultimate tensile strength, yield strength, elongation at break and Brinell hardness

Fitting function(s) between the mechanical property parameter(s) and the flow distance by multiple regression, based on the flow distances and the mechanical property parameters

Predicting the mechanical properti(es) of another casting part produced through the casting die at each sampling point, based on the flow distances and the function(s) between the mechanical property parameter(s) and the flow distance

Changing the structural arrangement of the casting die at the corresponding position(s), based on the differences between the predicted values and the desired values of the mechanical property parameter(s) as well as the function between the mechanical property parameter(s) and the flow distance

Figure 10

Europäisches
Patentamt

European
Patent Office

Office européen
des brevets

# EUROPEAN SEARCH REPORT

**Application Number**

EP 24 22 2146

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/184456 A1 (TAKEMURA KOJI [JP] ET AL) 20 June 2019 (2019-06-20) <br> * paragraph [0002] - paragraph [0011]; figures 1-5 * <br> * paragraph [0016] - paragraph [0018] * <br> * paragraph [0042] - paragraph [0086] * <br> - - - - - | 1-14 | INV. <br> B22D17/22 <br> B22D17/32 <br> B22D17/00 <br> B22D17/20 <br> B22D46/00 |
| X | JP 6 525026 B2 (MAZDA MOTOR) 5 June 2019 (2019-06-05) <br> * paragraph [0028] - paragraph [0048] * <br> - - - - - | 1-14 | ADD. <br> B22D2/00 |

**TECHNICAL FIELDS SEARCHED (IPC)**

B22D

The present search report has been drawn up for all claims

| Place of search | Date of completion of the search | Examiner |
|---|---|---|
| The Hague | 9 May 2025 | Desvignes, Rémi |

EPO FORM 1503 03.82 (P04C01)

## ANNEX TO THE EUROPEAN SEARCH REPORT
## ON EUROPEAN PATENT APPLICATION NO.

EP 24 22 2146

This annex lists the patent family members relating to the patent documents cited in the above-mentioned European search report.
The members are as contained in the European Patent Office EDP file on
The European Patent Office is in no way liable for these particulars which are merely given for the purpose of information.

09-05-2025

| Patent document cited in search report | | Publication date | Patent family member(s) | | Publication date |
|---|---|---|---|---|---|
| US 2019184456 | A1 | 20-06-2019 | JP | 6665849 B2 | 13-03-2020 |
| | | | JP | 2019105592 A | 27-06-2019 |
| | | | US | 2019184456 A1 | 20-06-2019 |
| JP 6525026 | B2 | 05-06-2019 | JP | 6525026 B2 | 05-06-2019 |
| | | | JP | 2019000861 A | 10-01-2019 |

EPO FORM P0459

For more details about this annex : see Official Journal of the European Patent Office, No. 12/82